# EUROPEAN PATENT APPLICATION

(11) **EP 4 716 078 A1**
(43) Date of publication of application: **25.03.2026**
(21) Application number: 24201425.6
(22) Date of filing: 19.09.2024
(51) Int. Cl.: H02M 1/00

(54) **METHOD, SYSTEM AND DEVICE FOR CONTROLLING MODULATION OF A POWER CONVERTER**

(71) Applicant: Hitachi Energy Ltd, 8050 Zürich (CH)
(72) Inventor: TAYYEBI, Ali, 72359 Västerås (SE); TUCKEY, Andrew Mark, Livingstone, 0837 (AU)
(74) Representative: Vossius & Partner Patentanwälte Rechtsanwälte mbB

(57) **Abstract**

The present disclosure relates to a method for controlling modulation of a power converter comprising determining an output voltage and output current of a power converter, and generating, based on the determined output voltage and output current and using at least one control loop, at least one control signal. The control loop comprises a high level control loop and a low level control loop, wherein the high level control loop and the low level control loop relate to different parameters of the power converter. The method further comprises generating a modulation control signal of the power converter using the control signal and an interfacing function. The disclosure further relates to a corresponding device and system.

## Description

The present invention relates to a method, system and device for controlling modulation of a power converter. In particular, the invention aims at controlling a power converter by controlling the modulation thereof.

Conventional power converter control architectures follow a so-called grid-following (GFL) design approach. The GFL design approach is highlighted by the utilisation of an explicit synchronisation mechanism, e.g., a phase locked loop (PLL). Further, the robust power/current set-point tracking is a salient feature of such control architecture. Recently, due to the increasing penetration of converter-based generation, an alternative converter control architecture, i.e., the grid-forming (GFM) control is perceived as a viable candidate to stabilise the modern power grids. The GFM design approach relies on an implicit synchronisation mechanism (via the high-level control sub-systems) and exhibits inertial response and frequency control features on fast timescales.

Regardless of the choice of GFM or GFL control architectures, often the converter DC (direct current) and AC (alternating current) subsystems are controlled under decoupling assumptions. In other words, the subsystems are treated as independent systems. However, there exists a natural coupling between these subsystems which cannot be properly represented by conventional control systems.

Further, the control objectives for the power conversion system can be challenging, especially when the power conversion system needs to exhibit various features across a wide frequency range and adapt to time-varying grid conditions. Consequently, it may not always be possible to fully comply with grid codes and desired specifications under a certain control design.

These drawbacks of the prior art are addressed with the present disclosure. It is an object of the present disclosure to provide a method for generating a unified control signal for a power conversion system, which mitigate, alleviate, or eliminate all or at least some of the above-discussed drawbacks of presently known solutions. In particular, one object is to unify the converter AC (either GFM or GFL) and DC control subsystems.

Further background information can be taken from, e.g., European patent application 24 189 542.4, which contents is incorporated in its entirety herein.

The invention is specified by the independent claims. Preferred embodiments are defined in the dependent claims. In the following description, although numerous features may be designated as optional, it is nevertheless acknowledged that all features comprised in the independent claims are not to be read as optional.

The present disclosure relates to a method for controlling modulation of a power converter comprising determining an output voltage and output current of a power converter, and generating, based on the determined output voltage and output current and using at least one control loop, at least one control signal. The control loop comprises a high level control loop and a low level control loop, wherein the high level control loop and the low level control loop relate to different parameters and control objectives of the power converter. The method further comprises generating a modulation control signal of the power converter using the control signal and an interfacing function.

Various embodiments may preferably implement the following features.

The control loop may also be referred to as control architecture.

Preferably, determining the output voltage and output current comprises determining a three-phase AC voltage and three-phase AC current at point of connection of the power converter to the grid.

Preferably, the interfacing function is interposed between the high level control loop and the low level control loop. Preferably, the interfacing function is adjusted based on an external signal. Preferably, the external signal is a coordinating signal or parameter received from a system operator or a network control or other power converters. Preferably, the method comprises reconfiguration/modification/adjustment of the interfacing function based on the coordinating signal/parameter received from the system operator/network control/other converters.

Preferably, the control loop comprises a direct current, DC, control loop and a grid forming, GFM, control loop and/or a grid following, GFL, control loop.

Preferably, the high level control loop and/or the low level control loop comprise the DC control loop and/or the GFM control loop and/or the GFL control loop.

Preferably, the high level control loop comprises at least one of active power control, reactive power control, frequency and angle synchronisation, or AC voltage control of the power converter. Preferably, the high level control loop relates to or comprises a controller/controllers of the converter system that is/are related to the system-level power converter performance and/or its interaction with the power grid.

Preferably, the low level control loop comprises at least one of current reference tracking control, voltage reference tracking control, current-limiting controls, virtual impedance control, or virtual admittance control of the power converter. Preferably, the low level control loop relates to or comprises a controller/controllers of the converter system that is/are related to device-level power converter performance and/or its physical, protection, and safety limits.

Preferably, the determined output voltage and output current comprise AC and/or DC measurements of the power converter.

Preferably, the method further comprises obtaining DC measurements from the power converter and, based on said DC measurements, estimating DC parameters or quantities or signals.

Preferably, the method further comprises obtaining AC measurements from the power converter and, based on said AC measurements, estimating AC parameters or quantities or signals.

Preferably, the interfacing functions is adjusted based on the estimated DC or AC quantities or parameters. Preferably, the method comprises reconfiguration/modification/adjustment of the interfacing function based on the estimated DC or AC quantities/parameters/conditions.

Preferably, the power converter is connected to a DC system, wherein preferably, the DC system is a power storage system such as a battery, or supercapacitor, a photovoltaic, PV, system, a high voltage DC, HVDC, link, and/or hydrogen electrolyser system, a DC load, or DC grid, or a combination thereof.

Preferably, the DC parameters or quantities relate to at least one of a state of charge, SOC, or state of health, SOH, of the power storage system, an estimated power production of the PV system, a potential consumption of the hydrogen electrolyser system or a condition of the HVDC system or any parameter or quantity of the DC system that cannot be directly measured.

The disclosure further relates to a corresponding device for controlling modulation of a power converter comprising at least one processor configured to perform the method as described above.

Various embodiments may preferably implement the following features.

Preferably, the device is connectable to at least one sensor and a power converter. Preferably, the at least one sensor is configured to measure an output voltage and output current of the power converter.

The disclosure also relates to a corresponding system for controlling modulation of a power converter comprising a power converter, at least one sensor configured to measure an output voltage and output current of the power converter and at least one processor configured to generate, based on the voltage and current measurements and using at least one control loop, at least one control signal. The control loop comprises a high level control loop and a low level control loop, wherein the high level control loop and the low level control loop relate to different parameters of the power converter. The processor is further configured to generate a modulation control signal of the power converter using the control signal and an interfacing function.

Various embodiments may preferably implement the following features.

Preferably, the at least one processor is further configured to perform the method as described above.

The present disclosure also relates to a non-transitory computer-readable storage medium storing instructions which, when executed by a processor, configure the processor to perform the method as outlined above.

Other aspects, features, and advantages will be apparent from the summary above, as well as from the description that follows, including the figures and the claims.

Embodiments of the present disclosure will now be described by way of example only and with reference to the following accompanying drawings. In the figures, the same reference numerals denote the same or similar elements.

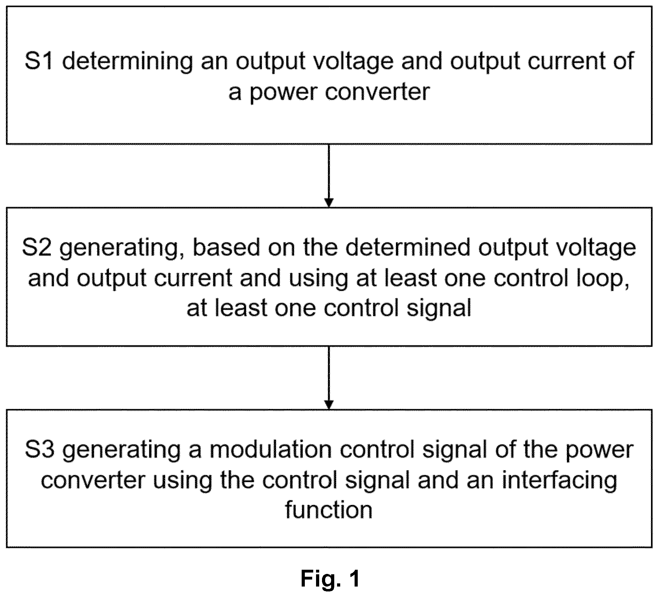

Fig. 1 shows a flowchart according to an embodiment of the present disclosure.
Figs. 2A and 2B show schematic block diagrams of interfacing functions according to embodiments of the present disclosure.
Fig. 3 shows a conventional power converter control architecture.
Fig. 4 shows a power converter control architecture according to an embodiment of the present disclosure.
Figs. 5 and 6 are schematic depictions of unified control architectures according to an embodiment of the present disclosure.

The present disclosure relates to a method for controlling modulation of a power converter comprising determining S1 an output voltage and output current of a power converter, and generating S2, based on the voltage and current measurements, i.e., the determined output voltage and output current, and using at least one control loop, at least one control signal. The control loop comprises a high level control loop and a low level control loop, wherein the high level control loop and the low level control loop relate to different parameters or physical subsystems of the power converter. The method further comprises generating S3 a modulation control signal of the power converter using the control signal and an interfacing function.

Determining output voltage and output current may encompass measuring voltage and current values, obtaining voltage and current values, e.g., from a sensor or a measurement unit, or estimating voltage and current values.

In an embodiment, determining the output voltage and output current comprises determining a three-phase AC voltage and three-phase AC current at point of connection of the power converter to the grid.

In an embodiment, the interfacing function is interposed between the high level control loop and the low level control loop. In an embodiment, the interfacing function is adjusted based on an external signal. In an embodiment, the external signal is a coordinating signal or parameter received from a system operator or a network control or other power converters. In an embodiment, the method comprises reconfiguration/modification/adjustment of the interfacing function based on the coordinating signal/parameter received from the system operator/network control/other converters.

This configuration may allow to apply arithmetic computation, weighted averaging, soft-witching, control actions, filtering on its inputs that can be either one-dimensional or multidimensional signals. Moreover, the overall control architecture may interact with the AC, DC, or generic estimation algorithms. The control loops may be dynamically reconfigured/enabled.

In an embodiment, the control loop comprises a direct current, DC, control loop and a grid forming, GFM, control loop and/or a grid following, GFL, control loop.

This may provide for control of the DC subsystem of the converter system, for instance, current/voltage/power/energy control. Also, control signals that are conventionally produced by AC controls may be generated. For instance, signals related to the active power control, and frequency and angle synchronization.

In an embodiment, the high level control loop and/or the low level control loop comprise the DC control loop and/or the GFM control loop and/or the GFL control loop.

In an embodiment, the high level control loop comprises at least one of active power control, reactive power control, frequency and angle synchronisation, or AC voltage control of the power converter. In an embodiment, the high level control loop relates to or comprises a controller/controllers of the converter system that is/are related to the system-level power converter performance.

Herein, system-level performance may relate to the converter interaction with the power grid. For instance, the grid codes typically define this, or the system operators define the desired converter behaviour with respect to the grid in certain phases.

Further, the high-level loops may define a desired behaviour for the low-level loops (i.e., how the internal system should work) such that the system-level performance requirements are met.

In an embodiment, the low level control loop comprises at least one of current reference tracking control, voltage reference tracking control, current-limiting controls, virtual impedance control, or virtual admittance control of the power converter. In an embodiment, the low level control loop relates to or comprises a controller/controllers of the converter system that is/are related to device-level power converter performance.

Device-level performance may relate to the internal behaviour of the converter system, i.e., if all the internal components of the converter work properly and their safety, protection, and physical limits are respected.

In an embodiment, the determined output voltage and output current comprise AC and/or DC measurements of the power converter.

The measurements may be internally processed to compute auxiliary signals. For instance, using the measured AC voltage and AC current, active and reactive power may be computed.

Those computations are typically referred to as signal "processing and calculation". They may be considered as part of the high-level loops or together with measurement block.

In an embodiment, the method further comprises obtaining DC measurements from the power converter and, based on said DC measurements, estimating DC parameters or quantities.

In an embodiment, the method further comprises obtaining AC measurements from the power converter and, based on said AC measurements, estimating AC parameters or quantities.

In an embodiment, the interfacing functions is adjusted based on the estimated DC or AC quantities or parameters. In an embodiment, the method comprises reconfiguration/modification/adjustment of the interfacing function based on the estimated DC or AC quantities/parameters/conditions.

In an embodiment, the power converter is connected to a DC system, wherein, the DC system is a power storage system such as a battery, or supercapacitor, a photovoltaic, PV, system, a high voltage DC, HVDC, link, and/or hydrogen electrolyser system, a DC load, or DC grid, or a combination thereof.

In an embodiment, the DC parameters or quantities relate to at least one of a state of charge, SOC, or state of health, SOH, of the power storage system, an estimated power production of the PV system, a potential consumption of the hydrogen electrolyser system or a condition of the HVDC system or any parameter or quantity of the DC system that cannot be directly measured. Such parameters may be, e.g., aging characteristics of the DC system/s, loading characteristics of the DC system/s, fault conditions of the DC system/s, parametric variations of the DC system/s, and/or DC power flows of the DC system/s.

According to the present disclosure, grid-following (GFL) control may refer to a control architecture that can be split into multiple layers. For example, multiple control blocks may be combined into a high-level control loop and the remaining set of the control blocks may be combined into a low-level control loop. However, this classification is not restrictive, and one can consider different arrangements.

The GFL control architecture when seen as an overall control system, may be configured to measure certain quantities, e.g., three-phase current and voltage at the point of connection to the power grid and accordingly provides control signals to the power converter such that certain control objectives are satisfied. A converter that is controlled by a GFL control algorithm locks onto the power grid frequency and exchanges a desired amount of active and reactive power with the power grid.

Grid-forming (GFM) control according to the present disclosure refers to a control architecture that can be split into multiple layers. For example, multiple control blocks may be combined into a high-level control loop and the remaining set of the control blocks may be combined into a low-level control loop. However, this classification is not restrictive, and one can consider different arrangements. The GFM control loop may be adapted to meet the emerging requirements from the system operators.

According to the present disclosure, a generalised conceptual approach to unify the GFL and GFM control architectures via interfacing control functions (ICFs) is presented. This may, e.g., refer to unifying the AC grid architecture with the converter DC control architectures.

The interfacing function(s) as used herein may represent any switching sequence, selectors, filters, virtual impedance/admittance dynamics, oscillator-like dynamics, measurement acquisition and processing, saturation and limiting mechanisms, and linear/nonlinear feedforward current/voltage/power terms. This interfacing approach allows to utilise different high/low-level control subsystems from either control architectures. Further, one can extend this idea by including an estimation layer to adaptively reconfigure the enabled architectures according to the grid conditions/characteristics.

The GFM control architecture when seen as an overall control system, may be configured to determine or measure certain quantities, e.g., three-phase current and voltage at the point of connection to the power grid, and may be configured to provide control signals to the power converter based on the determined quantities such that certain control objectives are satisfied. A converter that is controlled by a GFM control algorithm may thus form an independent frequency and AC voltage for the converter. The converter may further exchange a desired amount of active and reactive power with the power grid.

Further, as used herein, the high-level loops in either GFL or GFM architectures, may be configured to provide active or reactive power control and frequency synchronisation. These loops may provide certain references or computed quantities to the low-level loops that are obtained by processing the measurements by the high-level loop.

The low-level loops in either GFL or GFM architecture may be provided for ensuring the current or voltage control of the power converter. These loops may receive certain references and computed quantities from the high-level loops. Further, the low-level loops may be configured to define final control signals to be sent to the converter hardware based on the received references and quantities. The low-level loop may also directly receive any necessary data, e.g., measurements, if necessary.

The above configurations are merely examples and not to be viewed as restricting. They will be taken as an exemplary basis for the following detailed description.

Moreover, an estimation algorithm as presented herein may relate to the following. For converter-based applications, certain signals or parameters that are exogenous to the converter system but can impact their behaviour and performance may be estimated. Estimated parameters or signals may be, for instance, the grid strength, present inertia in the grid, grid impedance, fault condition, and others.

In principle, the estimation algorithm may receive certain measurements and provide estimated signals or parameters to the ICFs, that allow to choose the optimal configuration and parameter setting of the ICFs. In particular, such configuration and parameter setting may provide for adaptively changing the converter control architecture to the one which is the best fit for the estimated condition.

According to embodiments, the estimation algorithm can be realised in several ways.

In an embodiment, the control signal(s) generated in S3 may be generated using a control gain (K, 1-K). A value of K in the respective control gains (K, 1-K) may be equal to 0 or 1, or any positive real value between 0 and 1. Further, in an example, K and 1-K with K between 0 and 1 may result in a convex combination of the provided inputs (i.e., first variation signal and second variation signal). In an example, if x1 and x2 are the input signals, then y= K x1 + (1-k) x2 is a convex combination of x1 and x2 if 0<k<1.

The control signals can be provided to an estimation layer/algorithm to generate an external control signal (Uₑₓₜₑᵣₙₐₗ) or estimated parameter. The output of the estimation layer/algorithm, the external control signal (Uₑₓₜₑᵣₙₐₗ) can be provided to the ICFs. The external control signal (Uₑₓₜₑᵣₙₐₗ) is obtained by using an estimation algorithm, based on estimating at least one of parameter associated with amount of inertia in a grid, grid strength, grid topology, and a grid impedance.

The resetting of the interfacing function can be performed by modifying the control gains (K and 1-K) based on the external control signal (Uₑₓₜₑᵣₙₐₗ) in a time-varying manner. Further, the control and processing functions in the ICFs can be enabled or disabled according to external control signal (Uₑₓₜₑᵣₙₐₗ) in an adaptive manner.

In an example, different control units are implemented in different Digital Signal Processors, DSPs. However, the DSPs can be separated into different sets such as: the control units of the GFM control system can be implemented in one set of DSPs, similarly the control units of the GFL control system can be implemented in one set of DSPs and the ICFs, measurement, and the a coordinate transformation and a PWM unit can be implemented in one set of DSPs.

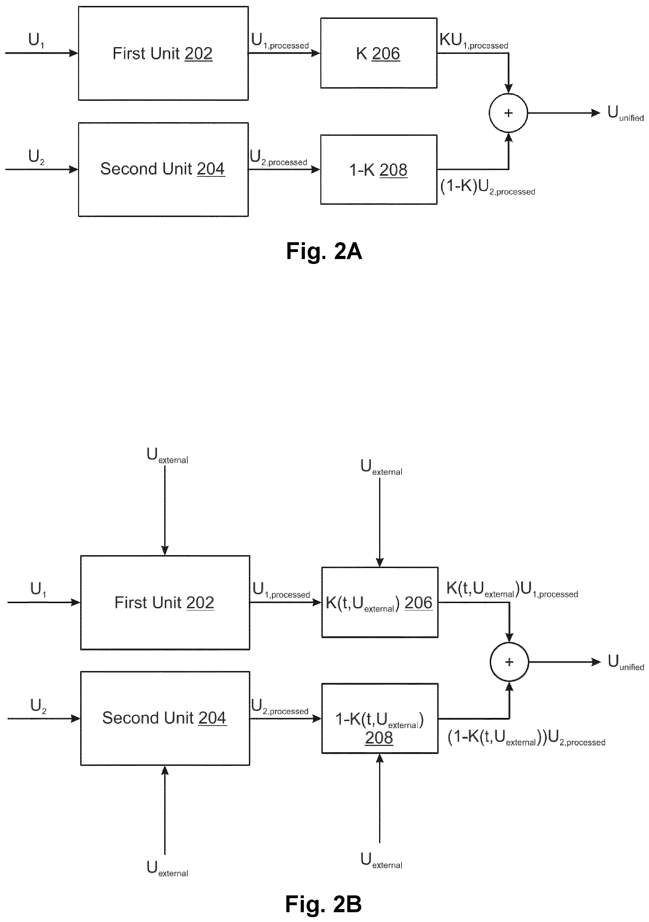

FIG. 2A discloses a schematic block diagram illustrating an example interfacing function as described above without an external input signal or estimated parameters according to some embodiments. As shown in FIG. 2A, a first input control signal (U₁) and a second control signal (U₂) are provided to a first control unit (202) (also may referred to as first unit (202)) and to a second control unit (204) (also may referred to as second unit (204)). The first input control signal U₁ may be generated by a first control loop, e.g., a GFM control loop, and the second control signal U₂ may be generated by a second control loop, e.g., a GFL control loop.

In an example, each of the first unit 202 and the second unit (204) may comprise at least one of a filter, a controller, an arithmetic function and or an identity gain. The output of the first unit (202) and the second unit (204) are the first input control signal (U_{1, processed}) and (U_{2, processed}), which are provided to their to respective control gains (K, 1-K) (206, 208) to generate the first control signal (KU_{1,processed}) and the second control signal ((1-K)U_{2,processed}). In an example, a value of K in the respective control gains (K, 1-K) (206, 208) is equal to 0 or 1, or any positive real value between 0 and 1. The unified control signal (U_{unified}) is generated by using at least one interfacing function, the first control signal (KU_{1,processed}) and the second control signal ((1-K)U_{2,processed}).

FIG. 2B discloses a schematic block diagram illustrating an example interfacing function with an external input signal or estimated parameters according to some embodiments. The interfacing function is similar to one of the ICFs as discussed above. As shown in FIG. 2B, the first input control signal (U₁) and the second control signal (U₂) and external control signals (Uₑₓₜₑᵣₙₐₗ) are provided to the first unit (202) and to the second unit (204). In an example, each of the first unit 202 and the second unit (204) may comprise at least one of a filter, a controller, an arithmetic function and or an identity gain. The output of the first unit (202) and the second unit (204) are the first input control signal (U_{1, processed}) and (U_{2, processed}), which are provided to their respective control gains (K, 1-K) (206, 208) to generate the first control signal (K(t,Uₑₓₜₑᵣₙₐₗ)U_{1,processed}) and the second control signal ((1-K(t,Uₑₓₜₑᵣₙₐₗ))U_{2, processed}). The unified control signal (U_{unified}) is generated by using the at least one interfacing function, the first control signal (K(t,Uₑₓₜₑᵣₙₐₗ)U_{1,processed}), the second control signal ((1-K(t,Uₑₓₜₑᵣₙₐₗ))U_{2, processed}) and the external control signal (Uₑₓₜₑᵣₙₐₗ).

The unified control signal (U_{unified}) can allow to consider a weighted average of the provided inputs, or a weighted average of the provided inputs after some filtering, processing, or possibly control actions. Further, the unified control signals (U_{unified}) allow to pass either of the inputs if K=1 or K=0. Finally, when considering the external input, i.e., Uₑₓₜₑᵣₙₐₗ, the unified control signal can dynamically and smoothly change from the first input signal (U₁) (or its processed/filtered/controlled version) to the second input signal (or its processed/filtered/controlled version) or to a weighted average of both with time-varying weights. Finally, when seen in more complex control architectures, the unified signals obtained from the ICFs, allow to combine the control features of different architectures or control systems.

Advantageously, embodiments herein provide smooth transition from one control system to another control system by scheduling the ICFs. Further, the embodiments herein provide unifying mixed frequency and time-domain control systems.

In an embodiment, an AC estimation algorithm may only rely on the AC measurements. In addition, a separate DC estimation layer may be provided that receives the DC measurements and estimates the signals and parameters that are provided to the ICFs.

In an embodiment, it is possible to consider a generic estimation algorithm that receives the measurements from both the AC and DC subsystems. The estimation algorithm may further include estimation sub-algorithms and estimate the relevant parameters or quantities for all the ICFs in the unified control architecture.

As far as the DC estimation algorithm is concerned, for instance, it can estimate the parameters or signals related the state-of-charge (SOC) and state-of-health (SOH) of the battery or supercapacitor systems, or the potential production of a PV system, or the potential of consumption of a Hydrogen electrolyser system, or the conditions of a HVDC system.

The estimation may be based on, e.g., a measured quantity such as voltage and current, or a priori information regarding system parameters such as capacitance, resistance, and inductance, or an analytical model, or a data-based model, or a combination thereof.

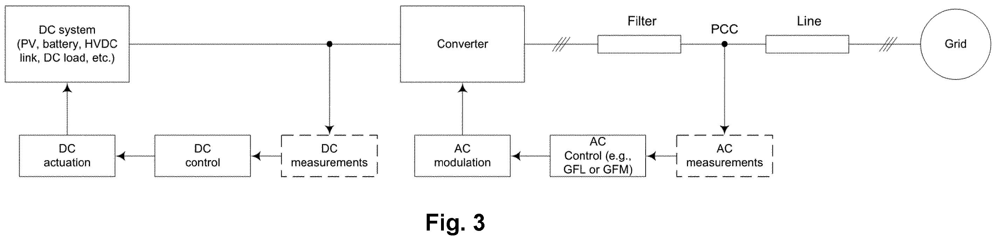

Fig. 3 shows an exemplary schematic diagram of a conventional control architecture. Therein, a DC system is connected via a converter to a grid. On a line between the converter and the DC system, DC measurements for DC control and actuation may be obtained. On the other hand, on a line between the converter and the grid (e.g., at a point of common coupling, PCC), AC measurements for AC control and AC modulation may be obtained.

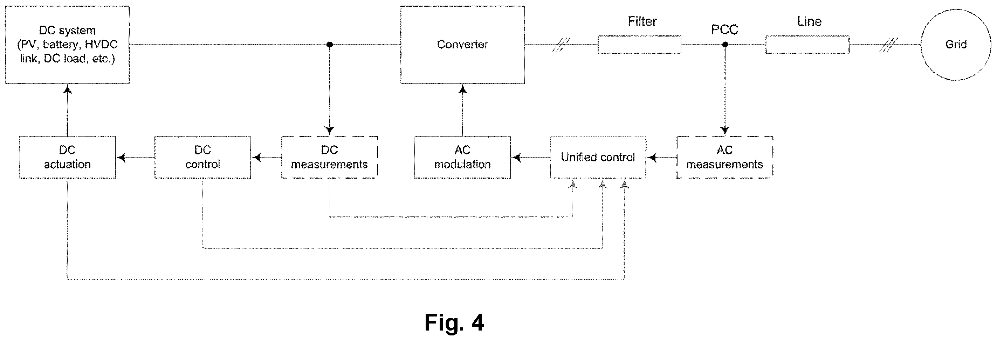

Fig. 4 shows a schematic diagram of a power converter control architecture according to an embodiment of the present disclosure. The overall structure and points for obtaining AC/DC measurements is similar to the conventional architecture. However, the proposed control architecture comprises a unified control which, under consideration of the DC parameters (measurements/control/actuation) as well as the AC parameters (measurements) provides a modulation control signal to the power converter.

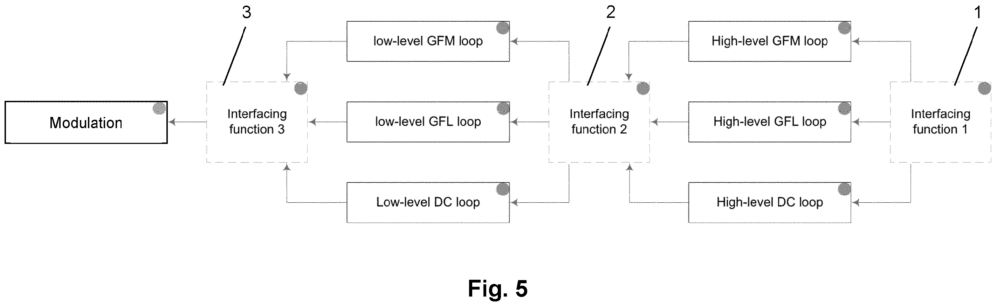

Fig. 5 is a schematic depiction of a unified control architecture as proposed herein. In particular, a unified control architecture employing three interfacing functions 1, 2, 3 is shown. In this embodiment, a group of high-level GFM loop, high-level GFL loop and high-level DC loop is interposed between two interfacing functions 1, 2 and a group of low-level GFM loop, low-level GFL loop and low-level DC loop is interposed between the subsequent interfacing functions 2, 3. It is to be noted that not all (sub-)loops need to be active or used at the same time and that at least one of them may be used or two or more of them may be combined as necessary.

The last interfacing function 3, in this case interfacing function 3, provides the output control signal for modulation control of the power converter.

In the figure, all boxes bearing a dot in the upper right corner may have access to both AC and DC measurements.

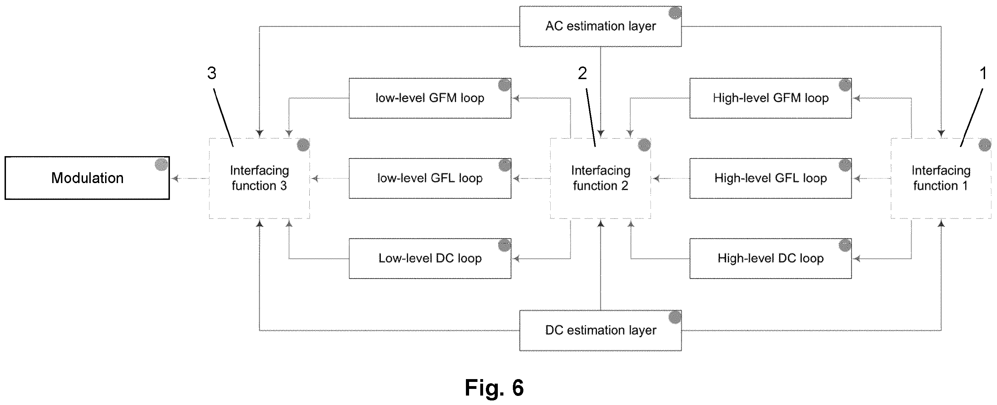

Fig. 6 is a schematic depiction of a unified control architecture according to an embodiment. In addition to the architecture of Fig. 5, an AC estimation layer and DC estimation layer are provided. The AC estimation layer and DC estimation layer may also be provided in a single (generic) estimation layer.

According to embodiments of the present disclosure, the ICFs in this application may unify three separate control architectures. For example, the GFM-based, GFL-based, and DC-based controls may be combined and output as a unified control signal.

A process according to an embodiment may be as follows. Measurements from DC and/or AC measurement devices may be obtained. The measurements (or the relevant parts thereof) may be provided to both the control loops and the ICFs as well as the estimation algorithm.

The ICFs may generate unified control signals and/or reference for subsequent loops. Moreover, the ICFs may set the control path (i.e., by configuring the enables control loops).

In parallel, the estimation algorithm may estimate relevant parameters and signals and provided them to the ICFs for (re-)configuration thereof.

Subsequently, the modulation signal for the converter may be generated based on the input from the unified control architecture.

According to embodiments, the following features may be implemented.

The overall unified GFM-GFL-DC architecture may be split into high-level and low-level loops.

Different loops from different architectures may be combined. For example, DC loops are combined with GFM or GFL loops. For instance, a high-level DC loop is active plus either GFM or GFL low-level loops.

The unified architecture may also be extended as needed. That is, more individual architecture and more levels, for instance, 2 GFMs, 2 GFLs, and 2 DC controls, where each architecture is split into high-level, mid-level, and low-level control loops may be provided.

The overall unified architecture may be combined with estimation layers as described before.

Further, embodiments of the present disclosure provide the adaptive reconfiguration of the control architecture based on the information provided by the estimation layer and by the means of ICF adjustments/modifications.

As needed, measurement devices, e.g., sensors for the DC systems for a converter system that is operated under such unified control architecture may be placed in the system.

In an embodiment, the converter may be operated fully based on the DC control architecture. This can be realised by the unified architecture under appropriate choice and design of the ICFs, and appropriate design of the high-level and low-level DC control loops.

Moreover, the enabled control loops may be reconfigured such that the limits and constraints of both AC and DC subsystems are met.

In an embodiment, the estimation algorithm may receive external certain signals from a system operator, network control, or other units in the system (e.g., other converters) and provides the necessary parameters or control signals to the ICFs. Subsequently, the architecture may be reconfigured by means of ICFs, to accommodate for the time-varying and external requirements. The above may be used to enable a coordinated operation with respect to other units that are connected to the same grid or microgrid. Further, the above can be also used to coordinate the converters that are connected to non-synchronous power grids (for instance, in the case of a grid split or HVDC converters that are connected to through the HVDC link but connected two different power grids). Also, the above can be used to coordinate converters that are located in two disconnected microgrids.

The synchronisation control subsystems may be considered as a part of the high-level loops. In an embodiment, hybrid synchronization capability by averaging the outputs of different high-level loops through the ICF may be provided. In this context, the hybrid terminology may refer to an overall synchronisation capability that is obtained by combining the high-level GFM or GFL loops with the high-level DC loop.

The present disclosure, in particular the unified control architecture may be used for one or more of grid-connected converters, islanded converters, microgrid applications, PV, battery, supercapacitors, HVDC systems, FACTS devices (e.g., STATCOM, SVC, E-STATCOM), hydrogen electrolysers, converter applications in traction systems, modular parallel-connected converter systems, a DC-AC converter application in which it interfaces a DC grid to an AC grid, or solid-state transformer (SST).

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organisation.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. Method for controlling modulation of a power converter comprising:
determining (S1) an output voltage and output current of a power converter;
generating (S2), based on the determined output voltage and output current and using at least one control loop, at least one control signal;
wherein the control loop comprises a high level control loop and a low level control loop, wherein the high level control loop and the low level control loop relate to different parameters of the power converter; and
generating (S3) a modulation control signal of the power converter using the control signal and an interfacing function (1, 2, 3).

2. Method according to claim 1, wherein the interfacing function (1, 2, 3) is interposed between the high level control loop and the low level control loop, and/or
wherein the interfacing function (1, 2, 3) is adjusted based on an external signal.

3. Method according to claim 1 or 2, wherein the control loop comprises a direct current, DC, control loop and a grid forming, GFM, control loop and/or a grid following, GFL, control loop.

4. Method according to claim 3, wherein the high level control loop and/or the low level control loop comprise the DC control loop and/or the GFM control loop and/or the GFL control loop.

5. Method according to any one of claims 1 to 4, wherein the high level control loop comprises at least one of active power control, reactive power control, frequency and angle synchronisation, or AC voltage control of the power converter, or a control of the power converter that is related to a system level converter performance.

6. Method according to any one of claims 1 to 5, wherein the low level control loop comprises at least one of current reference tracking control, voltage reference tracking control, current-limiting controls, virtual impedance control, or virtual admittance control of the power converter, or a control of the power converter that is related to a device level converter performance.

7. Method according to any one of claims 1 to 6, wherein the determined output voltage and output current comprise AC and/or DC measurements of the power converter.

8. Method according to any one of claims 1 to 7, further comprising obtaining DC measurements from the power converter and, based on said DC measurements, estimating DC parameters or quantities, and/or
further comprising obtaining AC measurements from the power converter and, based on said AC measurements, estimating AC parameters or quantities,
wherein preferably, the interfacing function (1, 2, 3) is adjusted based on the estimated DC or AC quantities or parameters.

9. Method according to claim 8, wherein the power converter is connected to a DC system, wherein preferably, the DC system is a power storage system such as a battery, or supercapacitor, a photovoltaic, PV, system, a high voltage DC, HVDC, link, and/or hydrogen electrolyser system, a DC load, or DC grid, or a combination thereof.

10. Method according to claim 9, wherein the DC parameters or quantities relate to at least one of a state of charge, SOC, or state of health, SOH, of the power storage system, an estimated power production of the PV system, a potential consumption of the hydrogen electrolyser system or a condition of the HVDC system, or any parameters or quantities of the DC system that cannot be directly measured.

11. Device for controlling modulation of a power converter comprising at least one processor configured to perform the method according to any one of claims 1 to 10.

12. Device according to claim 11, wherein the device is connectable to at least one sensor and a power converter, wherein the at least one sensor is configured to measure an output voltage and output current of the power converter.

13. System for controlling modulation of a power converter comprising:
a power converter;
at least one sensor configured to measure an output voltage and output current of the power converter;
at least one processor configured to generate, based on the voltage and current measurements and using at least one control loop, at least one control signal;
wherein the control loop comprises a high level control loop and a low level control loop, wherein the high level control loop and the low level control loop relate to different parameters of the power converter; and
wherein the processor is further configured to generate a modulation control signal of the power converter using the control signal and an interfacing function (1, 2, 3).

14. System according to claim 13, wherein the at least one processor is further configured to perform the method according to any one of claims 2 to 10.

15. Non-transitory computer-readable storage medium storing instructions which, when executed by a processor, configure the processor to perform the method according to any one of claims 1 to 10.
